# EUROPEAN PATENT SPECIFICATION

(11) **EP 1 355 258 B1**
(45) Date of publication and mention of the grant of the patent: **29.08.2007**
(21) Application number: 03250734.5
(22) Date of filing: 05.02.2003
(51) Int. Cl.: G06K 7/14

(54) **Image data processing devices and methods**
Gerät und Verfahren zur Bildverarbeitung
Appareil et méthode de traitement de données d'images

(30) Priority: 19.04.2002 JP 2002118243
(43) Date of publication of application: 22.10.2003
(73) Proprietor: FUJITSU LIMITED, Kawasaki-shi, Kanagawa 211-8588 (JP)
(72) Inventor: Yamaguchi, Nobuyasu, c/o Fujitsu Limited, Kawasaki-shi, Kanagawa 211-8588 (JP); Noda, Tsugio, c/o Fujitsu Limited, Kawasaki-shi, Kanagawa 211-8588 (JP)
(74) Representative: Hitching, Peter Matthew

(56) References cited:
- WO-A-97/49060
- US-A- 5 721 421
- US-A- 6 134 548

## Description

The present invention relates to an image data processing device having an image input device, and more particularly, to a portable device that can be used with an image input device such as a camera, or the like, and a communications path.

In recent years, the use of the Internet by means of a cellular phone, a PDA (Personal Digital Assistant), etc. has been increasing, and a cellular phone, a PDA, etc., which are quipped with an image input device such as a camera, etc. have been developed.

To read coded data such as a barcode, a two-dimensional barcode, etc., a terminal called a dedicated barcode reader is used.

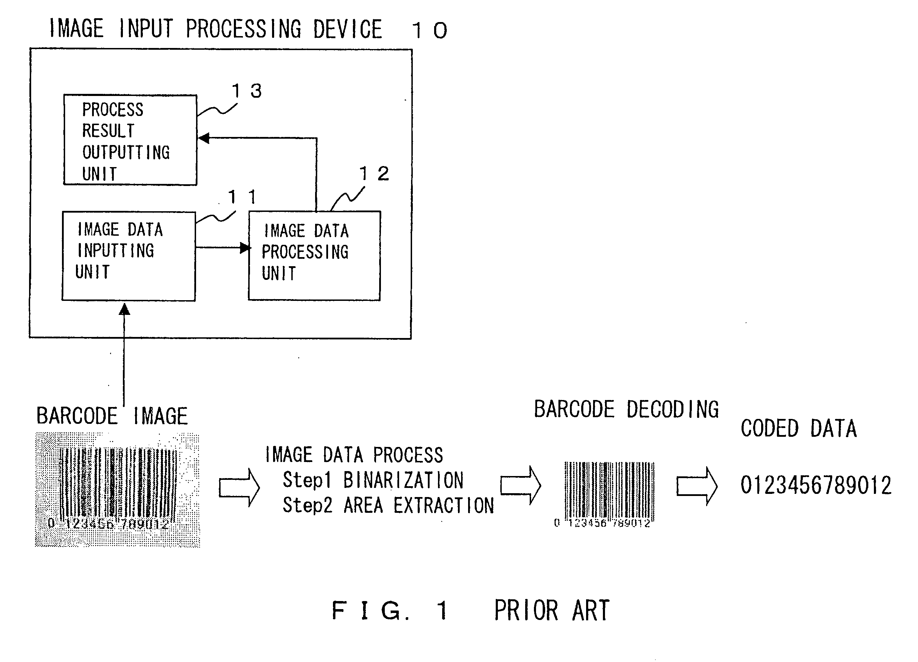

Fig. 1 exemplifies the configuration of a conventional image input processing device such as a barcode reader, etc.

An image input processing device 10 such as a barcode reader, etc. comprises: an image data inputting unit 11 reading a barcode image; an image data processing unit 12 receiving the read image from the image data inputting unit 11, and performing a process for the image data; and a process result outputting unit 13 receiving a process result from the image data processing unit 12.

After binarizing the read barcode image, the image data processing unit 12 performs area extraction to only take out the barcode portion. Then, the image data processing unit 12 extracts the data possessed by the barcode by decoding the barcode, and inputs the extracted data to the process result outputting unit 13 as coded data.

The barcode reader performs an image process and a decoding (extraction) process for the barcode data for the barcode image obtained with the camera, and finally outputs the coded data stored in the barcode. For these processes, an MPU the throughput of which is relatively high, or a dedicated LSI, and software which performs a process specific to a barcode image are required.

Additionally, Japanese Patent Laid-Open Publication No. 2001-103188 cuts down a terminal cost by arranging a decoding capability for barcode data on a server which is connected to a terminal via a communications line, and by transmitting a barcode image itself to the server to process the image.

As described above, in the conventional example, an image process and a barcode data decoding process are performed by the MPU and the memory of a device itself. Therefore, if an input image is a large screen image, and a complex image process is performed when barcode data is attempted to be captured with a terminal having a processor of low throughput like a portable terminal, processing time increases. As a result, more of the computing power of the MPU is required, or the processes themselves cannot be performed due to a limitation on a memory area. Additionally, since also the software which performs a process specific to a barcode image is installed in the device itself, hardware resources such as a memory for storing the software becomes necessary, leading to an increase in the device cost.

If a decoding process for barcode data is performed by a server as disclosed by Japanese Patent Laid-Open Publication No. 2001-103188, a barcode image is transmitted as such. Therefore, the amount of communication data is large, so that communication cost and time increase. Furthermore, a result of the barcode process is not transmitted to a terminal or other devices. Especially, on the side of a terminal directly used by a user, barcode data or its associated information cannot be used.

WO 97/49060 discloses a coded image capture and decoding system including a dedicated image capture unit and a host unit which operate to capture image data, generate a plurality of coded images, and, thereafter to decode the plurality of coded images with non-dedicated host processing circuitry.

It is desirable to provide an image data processing device capable of quickly performing complex image and information processes, even if the throughput (computing power or a memory space) of a device having an image input device is low, or software which performs a process specific to a barcode image, or the like is not installed.

It is also desirable to provide an image data processing device and a method thereof, with which a terminal user or a third party can freely use barcode data from which a process result is obtained, and its associated information.

According to first aspect of the present invention there is provided a portable device, for use in a system for decoding coded data, the device comprising: a camera operable to obtain an image including the coded data; preprocessing means operable to carry out a preprocess on image data representing said image so as to derive transfer data from the image data, said transfer data being smaller in amount than said image data; transmitting means operable to transmit the transfer data to a server of the system, remote from the device, via a communications path to permit said server and/or further apparatus connected to said server to carry out decoding of the coded data based on the transfer data; and receiving means operable to receive data resultant from the decoding of the coded data via said communications path or via another communications path; characterised in that said preprocess is any one of : a) binarization of said image data so that each pixel of the image is represented by a binary value; b) extraction of a portion of the image; and c) compression of said image data.

According to a second aspect of the present invention there is provided a method of decoding coded data, the method comprising: employing a portable device equipped with a camera to obtain an image including the coded data; carrying out in said device a preprocess on image data representing said image so as to derive transfer data from said image data, said transfer data being smaller in amount than said image data; transmitting the transfer data to a server remote from the device via a communications path; and carrying out, in said server and/or in further apparatus connected to said server, decoding of the coded data based on the transfer data; characterised in that said preprocess is any one of: a) binarizing of said image data so that each pixel of the image is represented by a binary value; b) extracting of a portion of the image; and c) compressing of said image data.

According to a third aspect of the present invention there is provided a system for decoding coded data, comprising a portable device and a server remote from the device and connected thereto via a communications path, the portable device having: a camera operable to obtain an image including the coded data; preprocessing means operable to carry out a preprocess on image data representing said image so as to derive transfer data from the image data, said transfer data being smaller in amount than said image data; and transmitting means operable to transmit the transfer data to said server via said communications path; and the system further comprising decoding means, provided in said server and/or in further apparatus connected thereto, for carrying out decoding of the coded data based on the transfer data; characterised in that said preprocess is any one of: a) binarization of said image data so that each pixel of the image is represented by a binary value; b) extraction of a portion of the image; and c) compression of said image data.

In an embodiment of the present invention, after a preprocess is performed for an image, which is obtained by an image data processing device such as a cellular phone equipped with a camera, the image is transferred to a server that is connected via a communications path and performs an image process. Then, the server is made to perform the image process, and only a result of the image process is received by the image data processing device. Therefore, the amount of data becomes small at an image transfer, and the data can be quickly transferred. At the same time, a main process in the image process is performed by a server the throughput of which is high. Therefore, a result obtained by performing a desired data process can be quickly obtained even if the computing power or the memory space of the image data processing device is insufficient.

Reference will now be made, by way of example, to the accompanying drawings, in which:
Fig. 1 exemplifies the configuration of a conventional image input processing device such as a barcode reader;
Fig. 2 shows a first arrangement not directly embodying the present invention;
Fig. 3 shows the outline of processes performed by devices in Fig. 2;
Fig. 4 shows a second arrangement not directly embodying the present invention;
Fig. 5 shows the outline of processes performed by devices in Fig. 4;
Fig. 6 shows a first preferred embodiment;
Fig. 7 shows the outline of processes performed by devices in the first preferred embodiment according to the present invention;
Fig. 8 shows a second preferred embodiment according to the present invention;
Fig. 9 shows the outline of processes performed by devices in the second preferred embodiment according to the present invention;
Fig. 10 shows a third preferred embodiment according to the present invention; and
Fig. 11 shows the outline of processes performed by devices in the third preferred embodiment according to the present invention.

An example of an image data processing device not directly embodying the present invention is configured by: a first device having an information inputting unit inputting image information including coded data, a data transferring unit transferring the input data, and a process result receiving unit receiving a process result from a second device; and the second device having a data receiving unit receiving data, a data processing unit performing a process for the data, and a process result transmitting unit transmitting a result of the data processing unit to the first device. The first and the second devices are connected by a communications path, and mutually transmit/receive data.

Or, the example image data processing device is configured by: a first device having an information inputting unit inputting image information including coded data, a data transferring unit transferring input data, and a process result receiving unit receiving a process result from a second device; and a second device having a data receiving unit receiving data, a data processing unit performing a process for the data, and a process result transmitting unit transmitting a result of the data processing unit to the first device. The first and the second devices are connected by a communications path, and mutually transmit/receive information. At the same time, information according to a result of the image processing unit within the second device is transmitted/received to/from a third device connected by a communications path.

Or, the example image data processing device is configured by: a first device having an information inputting unit inputting image information including coded data, a data transferring unit transferring input data, and a process result receiving unit receiving a process result from a second device; and a second device having a data receiving unit receiving data, a data processing unit performing a process for the data, and a process result transmitting unit transmitting a result of the data processing unit to the first device. The first and the second devices are connected by a communications path, and mutually transmit/receive information.

The outline of the preferred embodiments according to the present invention is explained below.

First of all, a method applied in the case where an image whose data amount is large is obtained by a device (the first device) whose data throughput is relatively low, such as a camera, etc. is described.

Firstly, a barcode is input by the camera (the first device), an image process and barcode decoding are performed by a second device (an image processing server (a data processing device whose data throughput is high, and can transmit/receive data to/from the camera (the first device) via a communications path)), and information corresponding to the coded data stored in the barcode is received by the camera (the first device).

Image data is transmitted from the first device (the camera, a cellular phone, etc.) equipped with an image input device, whose available memory is limited, to the second processing device which is connected by a communications path and has a large memory, and a process result is obtained. In this way, an image process which requires a large memory can be performed even if the first device equipped with the image input device can be used with only a small memory.

Conventionally, in the first device such as a camera, a cellular phone, etc., a barcode image process and a barcode decoding process are performed in a barcode image process, and coded data stored in a barcode is extracted. A software library of 100 KB or more is required respectively for the barcode image process and the barcode decoding process. If a grayscale image of a CIF (Common Intermediate Format) size (352 by 288 pixels) is used as a barcode image, only this image requires 100-KB of memory.

The case where a cellular phone equipped with a camera is assumed to be used for a barcode process is considered. For the cellular phone, its computing power and memory area are mainly used for the transmission/reception of a telephone call, and a telephone book capability for telephone numbers. For an image input and an image process, an empty space is used, and the amount of available memory is limited to several hundred KB. Accordingly, an image process which requires a large memory, such as a barcode process, cannot be performed by the cellular phone alone.

In the meantime, an image server connected by a communications line can perform a barcode process, since it can be used with a high processing speed and a memory required for the process. Additionally, a software library of a barcode image process, a barcode decoding process, etc. is installed on the image server, thereby eliminating the need for storing the software library in the memory of the cellular phone.

Accordingly, data is transmitted/received between the cellular phone equipped with the camera and the image processing server via a communications line, whereby the image process which requires a large memory can be implemented.

The shortening of a communication time between the first and the second devices is described next.

A barcode is input by the first device such as a camera, etc., an image process and barcode decoding are performed by the second device (image processing server), and coded data stored in the barcode is extracted and transmitted as such to the third device. If the first device equipped with an image input device transmits image data to the second processing device, and issues a request to perform a process to the third device connected by a communications path according to a process result, the process result of the second device is directly transmitted from the second device to the third device instead of transmitting the process result of the second device to the first device, which then issues the request to perform the process to the third device. As a result, a communication means can be simplified and made faster.

If shooting is made by a cellular phone equipped with a camera, the speeds of the communications paths between the first and the second devices, and between the first and the third devices are up to 1.2 KB/s (9600 bps: the communication speed of the cellular phone), whereas the communication speed of the second and the third devices, which are connected by the Internet, is 180 KB/s (1.5 Mbps: the communication speed of the third terminal (PC) connected to the Internet. ADSL in this case) . A big difference exists between the communication speeds.

If coded data is returned from the second device to the first device, it must be retransmitted from the first device to the third device that performs a database process so as to extract corresponding information. At this time, supplementary data such as the network address of the third device, etc. , which must be obtained from the second device, exist, and a communication amount on a low-speed communications path increases.

Accordingly, the coded data and the network address of the first device are directly transferred from the second device to the third device, corresponding information is prepared, and a process result is returned to the first device, so that an excess communication amount can be reduced.

Measures to speed up a communication process by performing a preprocess in a terminal is described below.

If a barcode is input by a camera, etc. (the first device), and a barcode image process and a barcode decoding process are performed by the second device (image processing server), grayscale image data input by the first device is transferred to the second device, by which the barcode image process and the barcode data decoding process are performed to extract coded data stored in the barcode. Here, in a preprocess within the barcode image process of the second device, an image binarization process whose processing load is light is performed by the first device, and not the grayscale image data but the binarized image data is transferred to the second device.

Part of the barcode image process that the second device is requested to perform is performed on the side of the first device equipped with an image input device, whereby the load on the second processing device can be lightened, a transfer data size can be reduced, and a communication processing time can be shortened.

An image binarization process is approximately 5 percent of the whole of the barcode image process and the barcode decoding process. Process requests reach the server simultaneously from a plurality of first devices. In the case of a server that can simultaneously process requests from 20 first devices, the image binarization process is performed by the first devices beforehand, so that the server can simultaneously process the requests from the 20 first devices or more, leading to an increase in the speed of the server process. Additionally, the binarization process is performed by the first device, whereby a transfer image data size can be reduced to approximately 1/8 from 100 KB to 12 KB. If the communications path between the first and the second devices has a transmission speed of 1.2 KB/s (9600 bps), the transmission/reception time of 80 seconds is reduced to 10 seconds, which is 1/8, for grayscale image data. That is, 8-times high-speed transfer can be implemented.

Furthermore, measures to speed up a communication by performing a partial extraction process in a first terminal (the first device) is described below.

If a barcode is input by a camera, etc. (the first device), and a barcode image process and a barcode decoding process are performed by the second device (image processing server), grayscale image data input by the first device is transferred to the second device, by which the barcode image process and the barcode decoding process are performed to extract coded data stored in the barcode. Here, a process for extracting a portion from the barcode image data is performed by the first device, and the extracted portion is transferred to the second device.

As a result, a transfer data size can be reduced, and a communication processing time can be shortened.

In case of a barcode, especially, a one-dimensional barcode, a decoding process can be performed if there is at least data obtained by extracting a barcode symbol portion by one horizontal line. A portion of 352 by 1 pixels, which corresponds to the one horizontal line of the barcode symbol portion, is extracted from monochrome image data of the CIF (352 by 288 pixels) size, and transferred, so that a transfer image data size can be reduced to 1/288 from 100 KB to 0.3 KB of the grayscale image data. However, decoding is unsuccessfully performed in some cases only with such an extracted portion. At this time, an instruction to extract and transmit another portion is issued from the second device to the first device. If decoding is successfully performed even after a transmission is repeated by n (1<n<288) times, a transfer image data size can be reduced to n/288. Additionally, instead of extracting another portion, a threshold value for the binarization process, which is performed by the first device, may be changed, and binarized image data may be transmitted to the second device.

Furthermore, measures to speed up a communication by performing an image compression process in a terminal is explained.

BMP compression (Japanese Patent Laid-Open Publication No. Hei 8-51545) is performed for data transmitted between the first device equipped with an image input device, and the second device that performs an image process, whereby transmission data can be reduced, and a communication time can be shortened.

The BMP compression is a bitmap data compression method (for further details, refer to Japanese Patent Laid-Open Publication No. Hei 8-51545), which can implement efficient data compression with a simple algorithm without requiring special hardware at a bitmap data transfer. For example, monochrome binary image data of the CIF size can be compressed to approximately 1/50 or smaller. Additionally, a compression/decompression process can be quickly performed in approximately 0.2 seconds. If the transmission speed of the communications path between the first and the second devices is 1.2 KB/s (9600 bps), transmission/reception time of 10 seconds in the case where an image is not compressed is reduced to 1/50 in the case where the image is compressed. Therefore, this 0.2 seconds plus the compression/decompression process time of 0.2 seconds is 0.4 seconds in total, which can implement 25-times speed-up.

A specific explanation is provided below with reference to the drawings.

In preferred embodiments, a process for a monochrome image is explained. For a color image, its monochrome image can be simply obtained if only luminance information is extracted from color information of a pixel. Therefore, the following preferred embodiments are applicable also to a color image.

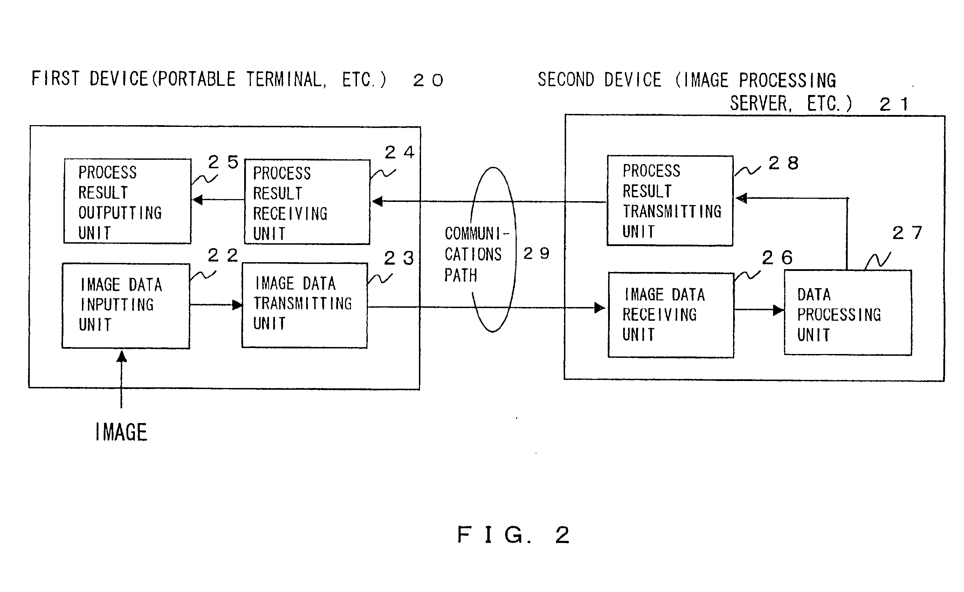

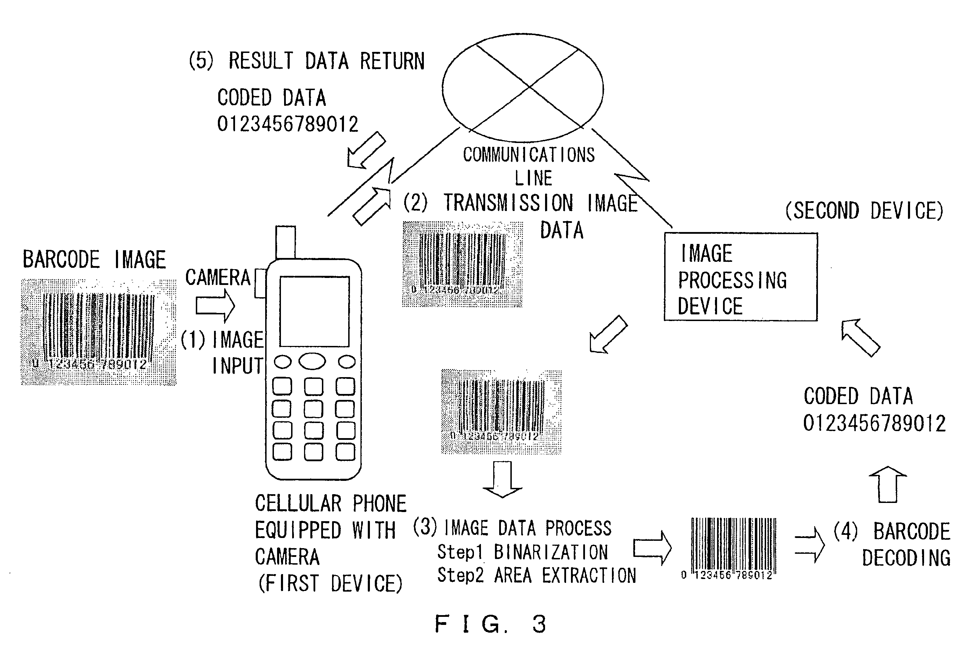

Fig. 2 shows a first arrangement not directly embodying the present invention but useful for understanding embodiments of the present invention, whereas Fig. 3 shows the outline of processes performed by devices.

In Fig. 2, a first device 20 such as a portable terminal equipped with an image input capability obtains image data. This obtainment is made by an image data inputting unit 22. The image data obtained by the image data inputting unit 22 is transmitted to an image data transmitting unit 23, and further transmitted to a second device 21 such as an image processing server, etc. via a communications path 29. The image data from the first device 20 is received by an image data receiving unit 26 within the second device 21, and the received image data is transmitted to a data processing unit 27. In the data processing unit 27, a barcode decoding process, etc., is performed. A result of the data process performed by the data processing unit 27 is transmitted to a process result transmitting unit 28, and further transmitted to the first device 20 via the communications path 29. In the first device 20, the transmitted process result is received by a process result receiving unit 24, passed to a process result outputting unit 25, and presented to a user of the first device 20 on a display (not shown).

Namely, image data input from the image data inputting unit such as a CMOS, a CCD sensor, etc., which is equipped by the first device, is transmitted to the second device connected by a communications path via the data transmitting unit. The image data received by the second device is held by the image data receiving unit. An image process, which is prespecified by the data processing unit (here, the barcode image process and the barcode decoding process), is performed for the held image data, and its result is transmitted to the process result transmitting unit. The result data is further transmitted to the first device via the communications path, and input to the process result outputting unit within the first device. In the first device, an image process result (coded data) can be obtained without performing an actual image process.

The flow of data is described more specifically with reference to Fig. 3. If a barcode is input as an image by a camera equipped by a cellular phone ((1)), this does not has any sense as it is. A process (decoding process) for converting the barcode image into coded data such as a numeral, a character, etc. embedded in the barcode, and for extracting the coded data from the barcode is required. Therefore, the image data is transmitted to the second device ((2)), and an image process and a decoding process, which are intended to convert the image data into coded data such as a numeral, a character, etc., are performed ((3) and (4)). In this preferred embodiment, the image process and the decoding process are performed by the second device (image processing server) connected by a communications path. In the second device (image processing server), an image process such as a binarization process, a barcode area extraction process, etc. is performed for the received image data, and then, the decoding process is performed. Coded data resultant from the decoding process is returned to the transmission source ((5)). In the first device, the coded data returned from the second device (image processing server) is displayed on a screen, so that the contents of the barcode can be displayed. For a barcode, its coded data itself does not have a sense, and information that is stored in a database, etc. and corresponded to the coded data is more important and has a sense in many cases. Therefore, the information may be converted by the second device (image processing server), and the information corresponded to the coded data may be returned to the first device.

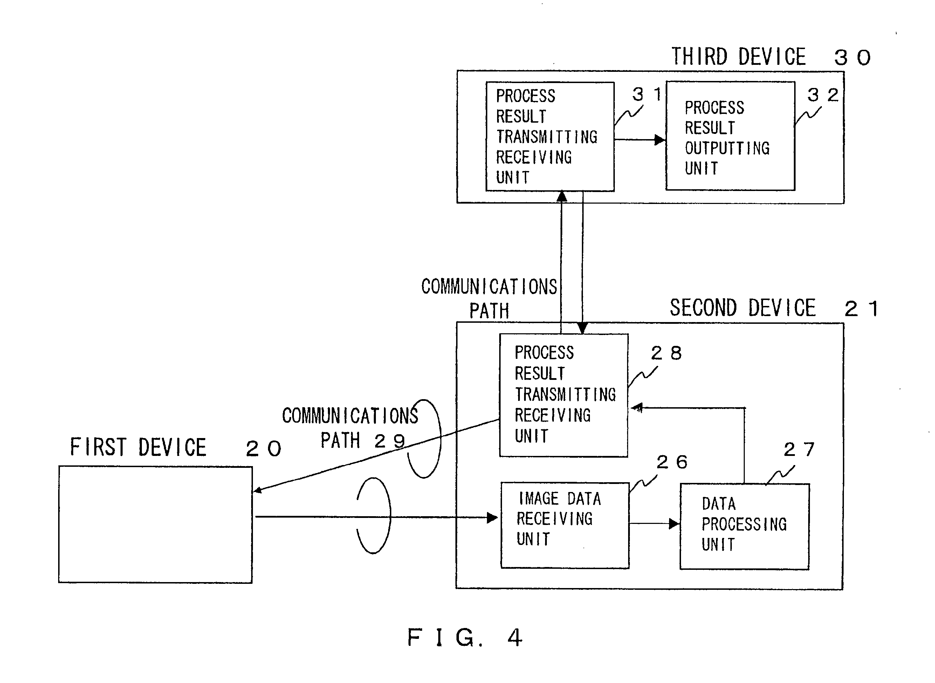

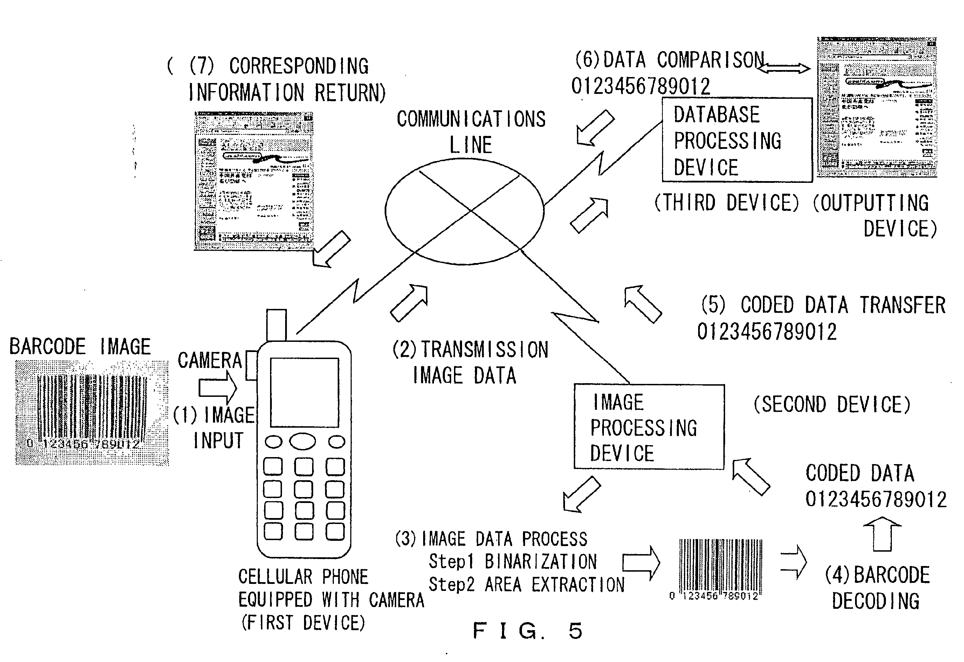

Fig. 4 shows a second arrangement not directly embodying the present invention but useful for understanding embodiments of the present invention, whereas Fig. 5 shows the outline of processes performed by devices.

As shown in Fig. 4, if a first device 20 equipped with an image input device transmits image data to a second device 21, and issues a request to perform a process to a third device 30 connected by a communications path according to a process result, the process result of the second device 21 is directly transmitted to the third device 30 instead of issuing the request from the first device 20 to the third device 30. As a result, a communication means from the second device 21 to the first device 20 is simplified and made faster.

As shown in Fig. 5, a barcode image is input by the first device ((1)), barcode decoding is performed by the second device (image processing server) ((3) and (4)), and coded data is transmitted to the third device, which is a database processing device ((5)). Then, information corresponding to the coded data is extracted by the third device ((6)). If an output device such as a monitor, etc. is comprised by the third device, the information corresponding to the coded data can be verified on its screen. Or, if this information is verified by the first device, it is directly transmitted from the third device to the first device ((7)).

As described above, it achieves a simpler communication than the first arrangement in which only an image process (barcode decoding) is performed and the returned code data is returned to the third device again.

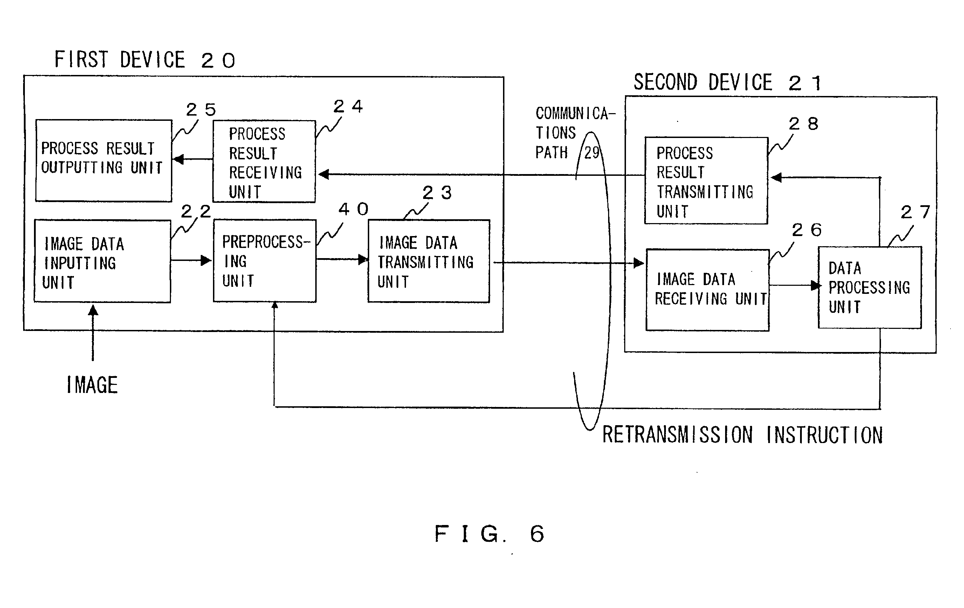

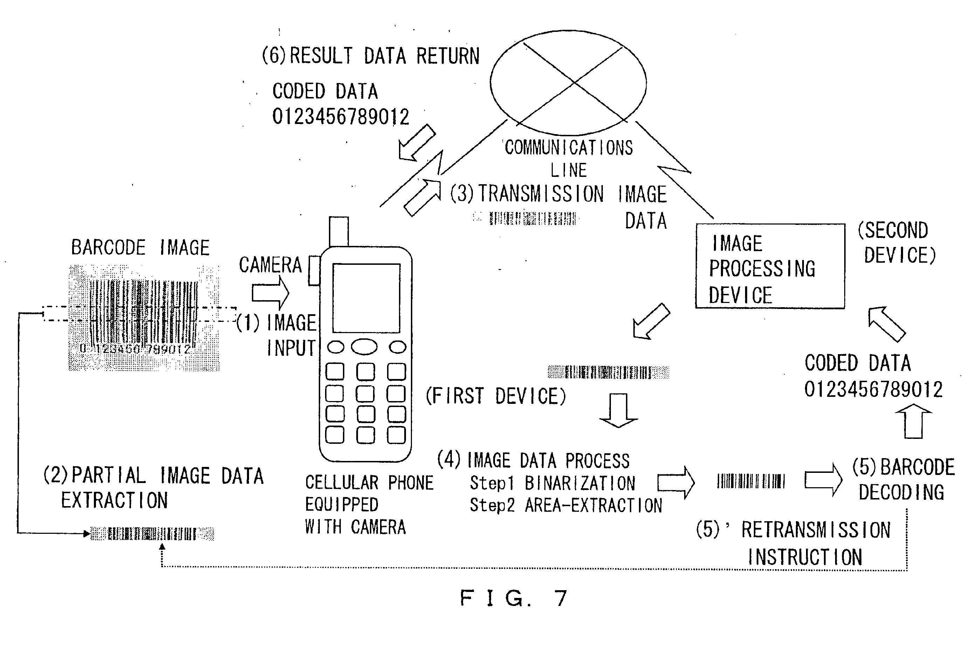

Fig. 6 shows a first preferred embodiment according to the present invention, whereas Fig. 7 shows the outline of processes performed by devices.

In Fig. 6, the same constituent elements as those shown in Fig. 2 are denoted with the same reference numerals, and their explanations are omitted.

Within a first device 20, a preprocessing unit 40, which performs a preprocess in an image process performed for image data, is arranged between an image data inputting unit 22 and an image data transmitting unit 23. In the preprocessing unit 40, for example, a process for extracting a portion from image data is performed, and the extracted portion is transferred to a second device 21. As a result, a transfer data size can be reduced, and a communication processing time can be shortened. Or, binarization may be performed as the preprocess. If a data processing unit 27 within the second device 21 fails to process the image data transmitted from the first device 20, it issues a request to extract and retransmit another portion to the preprocessing unit 40 within the first device 20 via a communications path (in the case where the process for extracting a portion from image data is performed as the preprocess). Or, in the case where binarization is performed as the preprocess, the data processing unit 27 within the second device 21 issues a request to retransmit a new binary image, which is obtained by changing a threshold value used for the binarization to a different value, to the preprocessing unit 40 within the first device 20 if it fails to process the image data.

Assume that barcode image data is input by the first device ((1)), and the process for extracting a portion from the barcode image data is performed as a preprocess ((2)) as shown in Fig. 7. In this case, the extracted barcode image data is transferred to the second device (image processing device) ((3)), by which an image process and a barcode decoding process are performed ((4) and (5)). If the barcode decoding process is unsuccessfully performed, an instruction to extract and retransmit another portion of the image data is issued from the second device (image processing device) to the first device (cellular phone equipped with a camera ((5')). When the barcode decoding process is successfully performed, resultant coded data is returned to the cellular phone equipped with the camera ((6)).

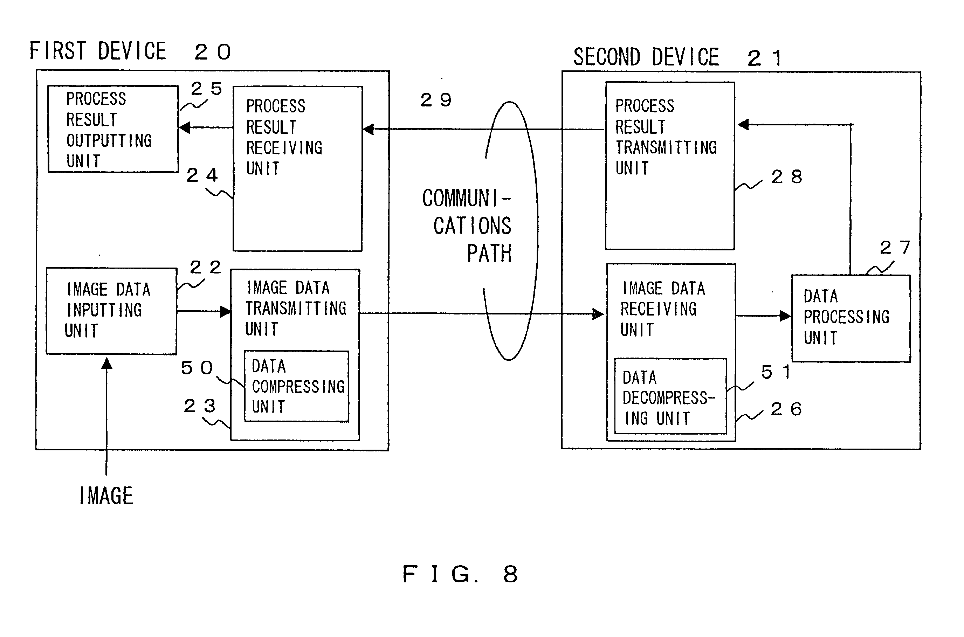

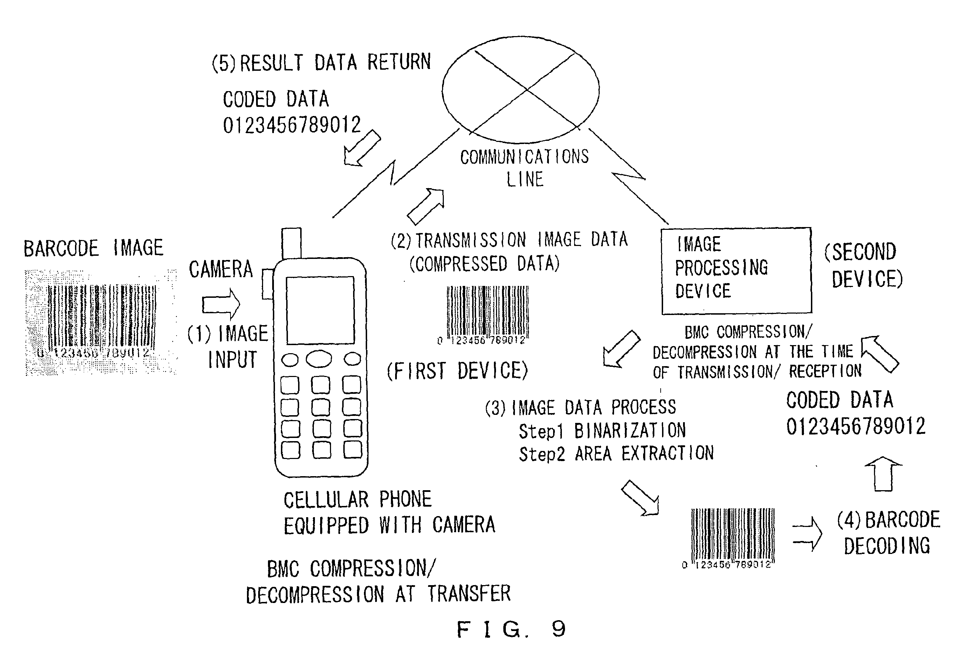

Fig. 8 shows a second preferred embodiment according to the present invention, whereas Fig. 9 shows the outline of processes performed by devices.

In Fig. 8, the same constituent elements as those shown in Fig. 6 are denoted with the same reference numerals, and their explanations are omitted.

As shown in Fig. 8, a data compressing unit 50 and a data decompressing unit 51, which are intended to compress and decompress transmission data in a data transmission made by a communications path 29 that connects a first device 20 and a second device 21, are arranged, whereby the amount of transmission data is reduced, and a communication time is shortened.

As shown in Fig. 9, a BMC coding method is used as an image data compression process in order to shorten an image data transmission time for an image process and a barcode decoding process, and image data to be transmitted/received is compressed, thereby shortening the transmission/reception time between the devices.

That is, in a cellular phone equipped with a camera (the first device), a barcode image is captured ((1)), and the input image is compressed by the BMC compression/decompression capability of the cellular phone equipped with the camera. Then, the compressed image data is transmitted to the second device (image processing device) via a communications line ((2)). In the image processing device, upon receipt of the compressed image, the image is decompressed, and an image data process is performed ((3)). In Fig. 9, binarization and area extraction are performed as the image process . However, these processes may be performed on the side of the first device. The barcode of the barcode image for which the image process is performed is decoded ((4)), coded data is extracted, and the extracted coded data is transmitted to the cellular phone equipped with the camera as data resultant from the image process ((5)).

An example where image binarization is performed as a preprocess, especially, an example where a two-dimensional barcode is handled is described below.

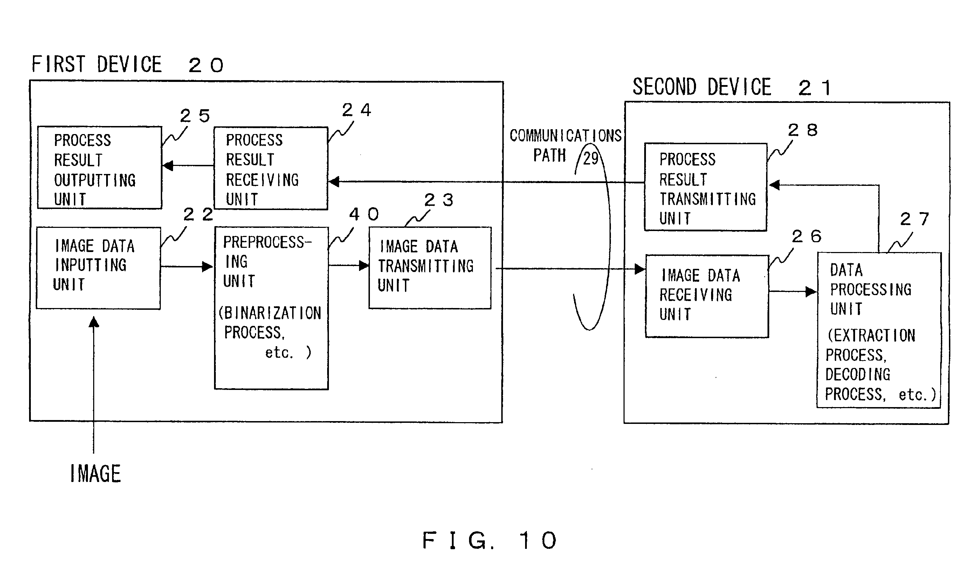

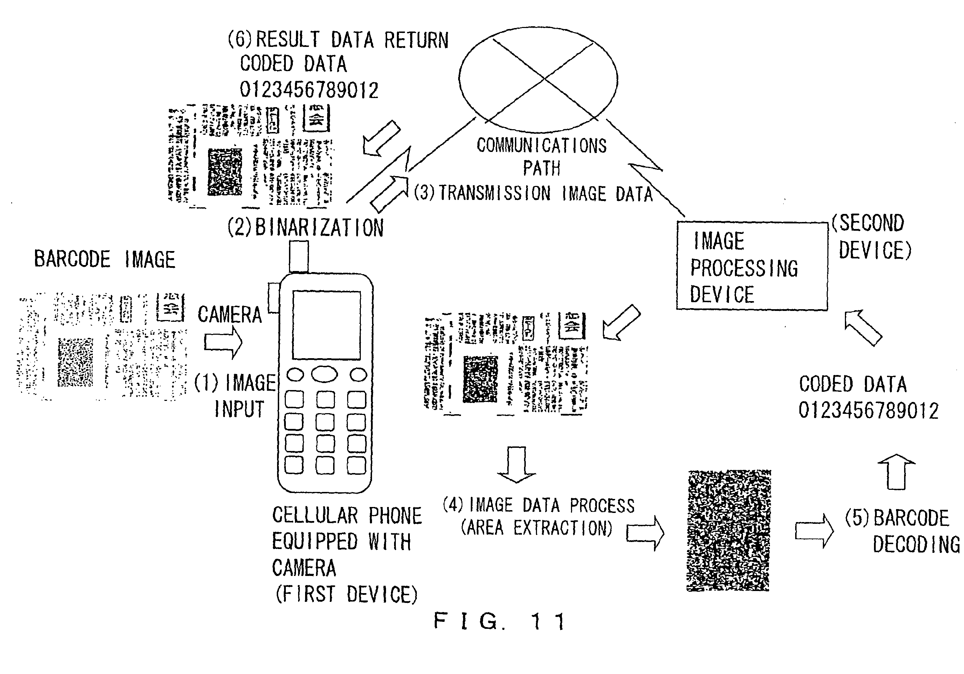

Fig. 10 shows a third preferred embodiment according to the present invention, whereas Fig. 11 shows the outline of processes performed by devices.

As coded data handled by the present invention, a one-dimensional barcode, a two-dimensional barcode, or data according to the one-dimensional or the two-dimensional barcode is assumed. This preferred embodiment refers to an example where a two-dimensional barcode is used. As a matter of course, the present invention is also applicable to a one-dimensional barcode in a similar manner.

In Fig. 10, the same constituent elements as those shown in Fig. 6 are denoted with the same reference numerals, and their explanations are omitted.

Within a first device 20, a preprocessing unit 40, which performs a preprocess in an image process performed for image data, is arranged between an image data inputting unit 22 and an image data transmitting unit 23. A color or a grayscale image obtained by reading an original including a two-dimensional barcode is input from the image data inputting unit 22. In the preprocessing unit 40, a binarization process for reducing gray levels of image data is performed. As a binarization process technique, a technique using the characteristic of a two-dimensional barcode as disclosed by Japanese Patent Laid-Open Publication No. 2001-251507 is used, so that the accuracy of a later decoding process, etc., can be improved. Additionally, by performing the binarization process, the size of image data is reduced to 1/24 (in the case where an original image is color). As a result, a transfer data size can be reduced, a communication processing time can be shortened, and a communication cost can be cut down.

The image data that is binarized and transferred to the second device 21 is transmitted to an image processing unit 27 within the second device 21, by which an image process and a barcode decoding process are performed. As an image process, a process for extracting a two-dimensional barcode area, or the like is performed. The technique using the characteristic of a two-dimensional barcode as disclosed by Japanese Patent Laid-Open Publication No. 2001-307014 is used also here, whereby a two-dimensional barcode area can be extracted more securely, and also the accuracy of barcode decoding is improved.

Note that the process for extracting a two-dimensional barcode area may be performed by a preprocessing unit 40 within the first device 20 as a preprocess. In this case, a transfer data size is further reduced, so that a communication processing time can be shortened, and a communication cost can be cut down. However, the algorithm of the process for extracting a two-dimensional barcode area is complex. Therefore, if the throughput of the first device 20 is much lower than that of the second device 21, an excess processing time is required, and can possibly exceed a shortened communication processing time. Accordingly, a process handled as the preprocess is suitably selected in consideration of the throughputs of the first device 20 and the second device 21.

In Fig. 11, an image including a two-dimensional barcode is obtained from a cellular phone equipped with a camera, which is the first device ((1)). Then, a preprocess such as binarization of the obtained image, or the like is performed ((2)), and the image data is transmitted to an image processing device, which is the second device, via a communications line ((3)). In the image processing device, an image data process such as area extraction from the received image, or the like is performed ((4)), the two-dimensional barcode is decoded and converted into coded data ((5)), and the coded data resultant from the image process is returned to the cellular phone equipped with the camera via the communications line ((6)).

As described above, according to one embodiment of the present invention, input image data including coded data of a device having an image input device is transmitted to an image processing server, and a process result is obtained, whereby it becomes possible to provide an image data processing device, which quickly performs a process of an image including complex coded data and its information process, even if the throughput of the device having the image input device is low.

## Claims

1. A portable device (20), for use in a system for decoding coded data, the device comprising:
a camera (22) operable to obtain an image including the coded data;
preprocessing means (40) operable to carry out a preprocess on image data representing said image so as to derive transfer data from the image data;
transmitting means (23) operable to transmit the transfer data to a server (21) of the system, remote from the device, via a communications path (29) to permit said server (21) and/or further apparatus (30) connected to said server to carry out decoding of the coded data based on the transfer data; and
receiving means (24) operable to receive data resultant from the decoding of the coded data via said communications path (29) or via another communications path;
**characterised in that** said transfer data is smaller in amount than said image data; and **in that** said preprocess is any one of:
a) binarization of said image data so that each pixel of the image is represented by a binary value;
b) extraction of a portion of the image; and
c) compression of said image data.

2. A portable device (20) as claimed in claim 1, being a device not dedicated to obtaining images including such coded data.

3. A portable device (20) as claimed in claim 1 or 2, being a cellular phone equipped with such a camera.

4. A portable device (20) as claimed in claim 1 or 2, being a personal digital assistant equipped with such a camera.

5. The portable device (20) according to any preceding claim, wherein:
the preprocessing means are operable to carry out the preprocess under a first condition or a second condition different from the first condition; and
following a request from the server and/or further apparatus, issued in the event that the server and/or further apparatus fails to carry out said decoding based on such transfer data derived under said first condition, the preprocessing means are operable to preprocess the obtained image data under said second condition so as to derive further transfer data therefrom and the transferring means are operable to transmit the further transfer data to the server.

6. The portable device (20) according to claim 5, wherein, in the case that said preprocess is binarization of said image data, the second condition has a threshold value for binarization different in value to a threshold value for binarization employed under said first condition.

7. The portable device (20) according to claim 5, wherein, in the case that said preprocess is extraction of a portion of the image, the second condition involves extracting a different portion of an image than a portion extracted under said first condition.

8. The portable device (20) according to any preceding claim, wherein the image including the coded data is an image including an image of a barcode.

9. The portable device (20) according to claim 8, wherein the barcode is a two-dimensional barcode.

10. A method of decoding coded data, the method comprising:
employing a portable device (20) equipped with a camera (22) to obtain an image including the coded data;
carrying out in said device a preprocess on image data representing said image so as to derive transfer data from said image data;
transmitting the transfer data to a server (21) remote from the device via a communications path (29); and
carrying out, in said server (21) and/or in further apparatus (30) connected to said server, decoding of the coded data based on the transfer data;
**characterised in that** said transfer data is smaller in amount than said image data and **in that** said preprocess is any one of:
a) binarizing said image data so that each pixel of the image is represented by a binary value;
b) extracting a portion of the image; and
c) compressing said image data.

11. The method according to claim 10, further comprising:
transmitting a result of the decoding of the coded data from the server and/or the further apparatus, via said communication path or via another communication path, to the portable device.

12. The method according to claim 10, further comprising:
employing the server to directly transfer a network address of the portable device to the further apparatus so as to enable the further apparatus to transmit a result of the decoding of the coded data to the portable device via another communication path.

13. The method according to claim 10, further comprising:
displaying the result of the decoding of the coded data on an output device (32) of the further apparatus (30).

14. The method of decoding coded data according to any one of claims 10 to 13, wherein:
the preprocessing means carry out the preprocess under a first condition or a second condition different from the first condition; and
following a request from the server and/or further apparatus, issued in the event that the server and/or further apparatus fails to carry out said decoding based on such transfer data derived under said first condition, the preprocessing means preprocess the obtained image data under said second condition so as to derive further transfer data therefrom and the transferring means transmit the further transfer data to the server.

15. The method of decoding coded data according to claim 14, wherein, in the case that said preprocess is binarization of said image data, the second condition is a threshold value for binarization different in value to a threshold value for binarization employed under said first condition.

16. The method of decoding coded data according to claim 14, wherein, in the case that said preprocess is extraction of a portion of the image, the second condition involves extracting a different portion of an image than a portion extracted under said first condition.

17. The method of decoding coded data according to any one of claims 10 to 16, wherein the image including the coded data is an image including an image of a barcode.

18. The method of decoding coded data according to claim 17, wherein the barcode is a two-dimensional barcode.

19. The method of decoding coded data according to any one of claims 10 to 18, wherein the server is configured by a plurality of image processing devices, one of which performs part of the decoding of the coded data based on the transfer data, the other image processing devices share and perform a remainder of the decoding.

20. A system for decoding coded data, comprising a portable device (20) and a server (21) remote from the device and connected thereto via a communications path (29),
the portable device (20) having:
a camera (22) operable to obtain an image including the coded data;
preprocessing means (40) operable to carry out a preprocess on image data representing said image so as to derive transfer data from the image data; and
transmitting means (23) operable to transmit the transfer data to said server (21) via said communications path (29); and
the system further comprising decoding means (27), provided in said server (21) and/or in further apparatus (30) connected thereto, for carrying out decoding of the coded data based on the transfer data;
**characterised in that** said transfer data is smaller in amount than said image data and **in that** said preprocess is any one of :
a) binarization of said image data so that each pixel of the image is represented by a binary value;
b) extraction of a portion of the image; and
c) compression of said image data.

21. The system for decoding coded data according to claim 20, wherein the server is configured by a plurality of image processing devices, one of which is operable to perform part of the decoding of the coded data based on the transfer data, the other image processing devices being operable to share and perform a remainder of said decoding.

22. The system for decoding coded data according to claim 20 or 21, wherein the server and/or further apparatus are operable to transmit a result of the decoding of the coded data, via said communication path or via another communication path, to the portable device.

23. The system for decoding coded data according to claim 20 or 21, wherein the server is operable to directly transfer a network address of the portable device to such further apparatus so as to enable the further apparatus to transmit a result of the decoding of the coded data to the portable device via another communication path.

24. The system for decoding coded data according to claim 20 or 21, wherein such further apparatus comprises an output device, and the further apparatus is operable to display a result of the decoding of the decoded data on the output device.

25. The system for decoding coded data according to any one of claims 20 to 24, wherein:
the preprocessing means are operable to carry out the preprocess under a first condition or a second condition different from the first condition; and
following a request from the server and/or further apparatus, issued in the event that the server and/or further apparatus fails to carry out said decoding based on such transfer data derived under said first condition, the preprocessing means are operable to preprocess the obtained image data under said second condition so as to derive further transfer data therefrom and the transferring means are operable to transmit the further transfer data to the server.

## Patentansprüche

1. Tragbare Vorrichtung (20) zur Verwendung in einem System zum Decodieren von codierten Daten, welche Vorrichtung umfasst:
eine Kamera (22), die betriebsfähig ist, um ein Bild zu erhalten, das die codierten Daten enthält;
ein Vorverarbeitungsmittel (40), das betriebsfähig ist, um einen Vorprozess an Bilddaten auszuführen, die das Bild darstellen, um Übertragungsdaten von den Bilddaten abzuleiten;
ein Sendemittel (23), das betriebsfähig ist, um die Übertragungsdaten über einen Kommunikationsweg (29) an einen Server (21) des Systems zu senden, der von der Vorrichtung abgesetzt ist, damit der Server (21) und/oder ein weiteres Gerät (30), das mit dem Server verbunden ist, das Decodieren der codierten Daten auf der Basis der Übertragungsdaten ausführen können; und
ein Empfangsmittel (24), das betriebsfähig ist, um Daten über den genannten Kommunikationsweg (29) oder über einen anderen Kommunikationsweg zu empfangen, die aus dem Decodieren der codierten Daten resultieren;
**dadurch gekennzeichnet, dass** die Menge der Übertragungsdaten kleiner als jene der Bilddaten ist und der Vorprozess einer der folgenden ist:
a) Digitalisierung der Bilddaten, so dass jedes Pixel des Bildes durch einen Binärwert dargestellt wird;
b) Extraktion eines Abschnittes des Bildes; und
c) Komprimierung der Bilddaten.

2. Tragbare Vorrichtung (20) nach Anspruch 1, die eine Vorrichtung ist, die nicht ausschließlich für den Erhalt von Bildern bestimmt ist, die solche codierten Daten enthalten.

3. Tragbare Vorrichtung (20) nach Anspruch 1 oder 2, die ein Mobiltelefon ist, das mit solch einer Kamera versehen ist.

4. Tragbare Vorrichtung (20) nach Anspruch 1 oder 2, die ein Taschencomputer (Personal Digital Assistant) ist, der mit solch einer Kamera versehen ist.

5. Tragbare Vorrichtung (20) nach irgendeinem vorhergehenden Anspruch, bei der:
das Vorverarbeitungsmittel betriebsfähig ist, um den Vorprozess unter einer ersten Bedingung oder einer zweiten Bedingung auszuführen, die sich von der ersten Bedingung unterscheidet; und
im Anschluss an eine Aufforderung von dem Server und/oder dem weiteren Gerät, die ausgegeben wird, falls der Server und/oder das weitere Gerät beim Ausführen des Decodierens auf der Basis von solchen Übertragungsdaten versagen, die unter der ersten Bedingung abgeleitet wurden, das Vorverarbeitungsmittel betriebsfähig ist, um die erhaltenen Bilddaten der Vorverarbeitung unter der zweiten Bedingung zu unterziehen, um weitere Übertragungsdaten von ihnen abzuleiten, und das Übertragungsmittel betriebsfähig ist, um die weiteren Übertragungsdaten an den Server zu senden.

6. Tragbare Vorrichtung (20) nach Anspruch 5, bei der in dem Fall, wenn der Vorprozess die Digitalisierung der Bilddaten ist, die zweite Bedingung einen Schwellenwert zur Digitalisierung hat, der sich im Wert von einem Schwellenwert zur Digitalisierung unterscheidet, der unter der ersten Bedingung verwendet wird.

7. Tragbare Vorrichtung (20) nach Anspruch 5, bei der in dem Fall, wenn der Vorprozess die Extraktion eines Abschnittes des Bildes ist, die zweite Bedingung das Extrahieren eines Abschnittes eines Bildes einschließt, der sich von einem Abschnitt unterscheidet, der unter der ersten Bedingung extrahiert wird.

8. Tragbare Vorrichtung (20) nach irgendeinem vorhergehenden Anspruch, bei der das Bild, das die codierten Daten enthält, ein Bild ist, das ein Bild eines Strichcodes enthält.

9. Tragbare Vorrichtung (20) nach Anspruch 8, bei der der Strichcode ein zweidimensionaler Strichcode ist.

10. Verfahren zum Decodieren von codierten Daten, welches Verfahren umfasst:
Verwenden einer tragbaren Vorrichtung (20), die mit einer Kamera (22) versehen ist, um ein Bild zu erhalten, das die codierten Daten enthält;
Ausführen, in der Vorrichtung, eines Vorprozesses an Bilddaten, die das Bild darstellen, um Übertragungsdaten von den Bilddaten abzuleiten;
Senden der Übertragungsdaten über einen Kommunikationsweg (29) an einen Server (21), der von der Vorrichtung abgesetzt ist; und
Ausführen, in dem Server (21) und/oder in einem weiteren Gerät (30), das mit dem Server verbunden ist, des Decodierens der codierten Daten auf der Basis der Übertragungsdaten;
**dadurch gekennzeichnet, dass** die Menge der Übertragungsdaten kleiner als jene der Bilddaten ist und der Vorprozess einer der folgenden ist:
a) Digitalisierung der Bilddaten, so dass jedes Pixel des Bildes durch einen Binärwert dargestellt wird;
b) Extraktion eines Abschnittes des Bildes; und
c) Komprimierung der Bilddaten.

11. Verfahren nach Anspruch 10, ferner mit:
Senden eines Resultats des Decodierens der codierten Daten von dem Server und/oder dem weiteren Gerät über den genannten Kommunikationsweg oder über einen anderen Kommunikationsweg an die tragbare Vorrichtung.

12. Verfahren nach Anspruch 10, ferner mit:
Verwenden des Servers, um eine Netzadresse der tragbaren Vorrichtung direkt zu dem weiteren Gerät zu übertragen, damit das weitere Gerät ein Resultat des Decodierens der codierten Daten über einen anderen Kommunikationsweg an die tragbare Vorrichtung senden kann.

13. Verfahren nach Anspruch 10, ferner mit:
Anzeigen des Resultats des Decodierens der codierten Daten an einer Ausgabevorrichtung (32) des weiteren Geräts (30).

14. Verfahren zum Decodieren von codierten Daten nach irgendeinem der Ansprüche 10 bis 13, bei dem:
das Vorverarbeitungsmittel den Vorprozess unter einer ersten Bedingung oder einer zweiten Bedingung ausführt, die sich von der ersten Bedingung unterscheidet; und
im Anschluss an eine Aufforderung von dem Server und/oder dem weiteren Gerät, die ausgegeben wird, falls der Server und/oder das weitere Gerät beim Ausführen des Decodierens auf der Basis von solchen Übertragungsdaten versagen, die unter der ersten Bedingung abgeleitet wurden, das Vorverarbeitungsmittel die erhaltenen Bilddaten der Vorverarbeitung unter der zweiten Bedingung unterzieht, um weitere Übertragungsdaten von ihnen abzuleiten, und das Übertragungsmittel die weiteren Übertragungsdaten an den Server sendet.

15. Verfahren zum Decodieren von codierten Daten nach Anspruch 14, bei dem in dem Fall, wenn der Vorprozess die Digitalisierung der Bilddaten ist, die zweite Bedingung ein Schwellenwert zur Digitalisierung ist, der sich im Wert von einem Schwellenwert zur Digitalisierung unterscheidet, der unter der ersten Bedingung verwendet wird.

16. Verfahren zum Decodieren von codierten Daten nach Anspruch 14, bei dem in dem Fall, wenn der Vorprozess die Extraktion eines Abschnittes des Bildes ist, die zweite Bedingung das Extrahieren eines Abschnittes eines Bildes einschließt, der sich von einem Abschnitt unterscheidet, der unter der ersten Bedingung extrahiert wird.

17. Verfahren zum Decodieren von codierten Daten nach irgendeinem der Ansprüche 10 bis 16, bei dem das Bild, das die codierten Daten enthält, ein Bild ist, das ein Bild eines Strichcodes enthält.

18. Verfahren zum Decodieren von codierten Daten nach Anspruch 17, bei dem der Strichcode ein zweidimensionaler Strichcode ist.

19. Verfahren zum Decodieren von codierten Daten nach irgendeinem der Ansprüche 10 bis 18, bei dem der Server aus einer Vielzahl von Bildverarbeitungsvorrichtungen konfiguriert ist, von denen eine einen Teil der Decodierung der codierten Daten auf der Basis der Übertragungsdaten ausführt und die anderen Bildverarbeitungsvorrichtungen einen Rest der Decodierung unter sich teilen und ausführen.

20. System zum Decodieren von codierten Daten, das eine tragbare Vorrichtung (20) und einen Server (21) umfasst, der von der Vorrichtung abgesetzt ist und über einen Kommunikationsweg (29) mit ihr verbunden ist,
wobei die tragbare Vorrichtung (20) enthält:
eine Kamera (22), die betriebsfähig ist, um ein Bild zu erhalten, das die codierten Daten enthält;
ein Vorverarbeitungsmittel (40), das betriebsfähig ist, um einen Vorprozess an Bilddaten auszuführen, die das Bild darstellen, um Übertragungsdaten von den Bilddaten abzuleiten; und
ein Sendemittel (23), das betriebsfähig ist, um die Übertragungsdaten über den Kommunikationsweg (29) an den Server (21) zu senden; und
das System ferner ein Decodiermittel (27) umfasst, das in dem Server (21) und/oder in einem weiteren Gerät (30) vorgesehen ist, das mit ihm verbunden ist, zum Ausführen des Decodierens der codierten Daten auf der Basis der Übertragungsdaten;
**dadurch gekennzeichnet, dass** die Menge der Übertragungsdaten kleiner als jene der Bilddaten ist und der Vorprozess einer der folgenden ist:
a) Digitalisierung der Bilddaten, so dass jedes Pixel des Bildes durch einen Binärwert dargestellt wird;
b) Extraktion eines Abschnittes des Bildes; und
c) Komprimierung der Bilddaten.

21. System zum Decodieren von codierten Daten nach Anspruch 20, bei dem der Server aus einer Vielzahl von Bildverarbeitungsvorrichtungen konfiguriert ist, von denen eine betriebsfähig ist, um einen Teil der Decodierung der codierten Daten auf der Basis der Übertragungsdaten auszuführen, und die anderen Bildverarbeitungsvorrichtungen betriebsfähig sind, um einen Rest der Decodierung unter sich zu teilen und auszuführen.

22. System zum Decodieren von codierten Daten nach Anspruch 20 oder 21, bei dem der Server und/oder das weitere Gerät betriebsfähig sind, um ein Resultat des Decodierens der codierten Daten über den genannten Kommunikationsweg oder über einen anderen Kommunikationsweg an die tragbare Vorrichtung zu senden.

23. System zum Decodieren von codierten Daten nach Anspruch 20 oder 21, bei dem der Server betriebsfähig ist, um eine Netzadresse der tragbaren Vorrichtung direkt zu solch einem weiteren Gerät zu übertragen, damit das weitere Gerät ein Resultat des Decodierens der codierten Daten über einen anderen Kommunikationsweg an die tragbare Vorrichtung senden kann.

24. System zum Decodieren von codierten Daten nach Anspruch 20 oder 21, bei dem solch ein weiteres Gerät eine Ausgabevorrichtung umfasst und das weitere Gerät betriebsfähig ist, um ein Resultat des Decodierens der codierten Daten an der Ausgabevorrichtung anzuzeigen.

25. System zum Decodieren von codierten Daten nach irgendeinem der Ansprüche 20 bis 24, bei dem:
das Vorverarbeitungsmittel betriebsfähig ist, um den Vorprozess unter einer ersten Bedingung oder einer zweiten Bedingung auszuführen, die sich von der ersten Bedingung unterscheidet; und
im Anschluss an eine Aufforderung von dem Server und/oder dem weiteren Gerät, die ausgegeben wird, falls der Server und/oder das weitere Gerät beim Ausführen des Decodierens auf der Basis von solchen Übertragungsdaten versagen, die unter der ersten Bedingung abgeleitet wurden, das Vorverarbeitungsmittel betriebsfähig ist, um die erhaltenen Bilddaten der Vorverarbeitung unter der zweiten Bedingung zu unterziehen, um weitere Übertragungsdaten von ihnen abzuleiten, und das Übertragungsmittel betriebsfähig ist, um die weiteren Übertragungsdaten an den Server zu senden.

## Revendications

1. Dispositif portable (20) à utiliser dans un système de décodage de données codées, le dispositif comprenant :
un appareil de prise de vue (22) pouvant être mis en oeuvre pour obtenir une image comprenant les données codées,
un moyen de prétraitement (40) pouvant être mis en oeuvre pour exécuter un prétraitement sur des données d'image représentant ladite image de manière à obtenir des données de transfert à partir des données d'image,
un moyen de transmission (23) pouvant être mis en oeuvre pour transmettre les données de transfert à un serveur (21) du système, à distance du dispositif, par l'intermédiaire d'une voie de communication (29) pour permettre que ledit serveur (21) et/ou un autre équipement (30) relié audit serveur exécute le décodage des données codées sur la base des données de transfert, et
un moyen de réception (24) pouvant être mis en oeuvre pour recevoir des données résultant du décodage des données codées par l'intermédiaire de ladite voie de communication (29) ou par l'intermédiaire d'une autre voie de communication,
**caractérisé en ce que** la quantité desdites données de transfert est plus petite que celle desdites données d'image et **en ce que** ledit prétraitement est un traitement quelconque parmi :
a) une binarisation desdites données d'image de sorte que chaque pixel de l'image soit représenté par une valeur binaire,
b) une extraction d'une partie de l'image, et
c) une compression desdites données d'image.

2. Dispositif portable (20) selon la revendication 1, qui est un dispositif non spécialisé pour obtenir des images comprenant de telles données codées.

3. Dispositif portable (20) selon la revendication 1 ou 2, qui est un téléphone cellulaire équipé d'un tel appareil de prise de vue.

4. Dispositif portable (20) selon la revendication 1 ou 2, qui est un assistant numérique personnel équipé d'un tel appareil de prise de vue.

5. Dispositif portable (20) selon l'une quelconque des revendications précédentes, dans lequel :
le moyen de prétraitement peut être mis en oeuvre pour exécuter le prétraitement dans une première condition ou une seconde condition différente de la première condition, et
après une demande provenant du serveur et/ou d'un autre équipement, émise dans le cas où le serveur et/ou un autre équipement ne réussisse pas à exécuter ledit décodage sur la base de telles données de transfert obtenues dans ladite première condition, le moyen de prétraitement peut être mis en oeuvre pour prétraiter des données d'image obtenues dans ladite seconde condition de manière à en obtenir d'autres données de transfert et le moyen de transfert peut être mis en oeuvre pour transmettre les autres données de transfert au serveur.

6. Dispositif portable (20) selon la revendication 5, dans lequel, dans le cas où ledit prétraitement est la binarisation desdites données d'image, la seconde condition présente une valeur de seuil pour la binarisation ayant une valeur différente d'une valeur de seuil pour la binarisation employée dans ladite première condition.

7. Dispositif portable (20) selon la revendication 5, dans lequel, dans le cas où ledit prétraitement est l'extraction d'une partie de l'image, la seconde condition implique l'extraction d'une partie d'image différente d'une partie extraite dans ladite première condition.

8. Dispositif portable (20) selon l'une quelconque des revendications précédentes, dans lequel l'image comprenant les données codées est une image comprenant une image d'un code à barres.

9. Dispositif portable (20) selon la revendication 8, dans lequel le code à barres est un code à barres à deux dimensions.

10. Procédé de décodage de données codées, le procédé comprenant les étapes consistant à :
employer un dispositif portable (20) équipé d'un appareil de prise de vue (22) pour obtenir une image comprenant les données codées,
exécuter dans ledit dispositif un prétraitement sur les données d'image représentant ladite image de manière à obtenir des données de transfert desdites données d'image,
transmettre les données de transfert à un serveur (21) éloigné du dispositif par l'intermédiaire d'une voie de communication (29), et
exécuter, dans ledit serveur (21) et/ou dans un autre équipement (30) relié audit serveur, le décodage des données codées sur la base des données de transfert,
**caractérisé en ce que** la quantité desdites données de transfert est plus petite que celle desdites données d'image et **en ce que** le prétraitement est l'un quelconque parmi :
a) la binarisation desdites données d'image de sorte que chaque pixel de l'image soit représenté par une valeur binaire,
b) l'extraction d'une partie de l'image, et
c) la compression desdites données d'image.

11. Procédé selon la revendication 10, comprenant en outre l'étape consistant à :
transmettre un résultat du décodage des données codées depuis le serveur et/ou l'autre équipement, par l'intermédiaire de ladite voie de communication ou par l'intermédiaire d'une autre voie de communication au dispositif portable.

12. Procédé selon la revendication 10, comprenant en outre l'étape consistant à :
employer le serveur pour transférer directement une adresse de réseau du dispositif portable à l'autre équipement de manière à permettre à l'autre équipement de transmettre un résultat du décodage des données codées au dispositif portable par l'intermédiaire d'une autre voie de communication.

13. Procédé selon la revendication 10, comprenant en outre l'étape consistant à :
afficher le résultat du décodage des données codées sur un dispositif de sortie (32) de l'autre équipement (30).

14. Procédé de décodage de données codées selon l'une quelconque des revendications 10 à 13, dans lequel :
le moyen de prétraitement exécute le prétraitement dans une première condition ou une seconde condition différente de la première condition, et
après une demande provenant du serveur et/ou d'un autre équipement, émise dans le cas où le serveur et/ou un autre équipement ne réussit pas à exécuter ledit décodage sur la base de telles données de transfert obtenues dans ladite première condition, le moyen de prétraitement prétraite les données d'image obtenues dans ladite second condition de manière à en obtenir d'autres données de transfert et le moyen de transfert transmet les autres données de transfert au serveur.

15. Procédé de décodage de données codées selon la revendication 14, dans lequel, dans le cas où ledit prétraitement est la binarisation desdites données d'image, la seconde condition est une valeur de seuil pour la binarisation ayant une valeur différente d'une valeur de seuil pour la binarisation employée dans ladite première condition.

16. Procédé de décodage de données codées selon la revendication 14, dans lequel, dans le cas où ledit prétraitement est l'extraction d'une partie de l'image, la seconde condition implique l'extraction d'une partie d'image différente d'une partie extraite dans ladite première condition.

17. Procédé de décodage de données codées selon l'une quelconque des revendications 10 à 16, dans lequel l'image comprenant les données codées est une image comprenant une image d'un code à barres.

18. Procédé de décodage de données codées selon la revendication 17, dans lequel le code à barres est un code à barres à deux dimensions.

19. Procédé de décodage de données codées selon l'une quelconque des revendications 10 à 18, dans lequel le serveur est configuré par une pluralité de dispositifs de traitement d'image, dont l'un exécute une partie du décodage des données codées sur la base des données de transfert, les autres dispositifs de traitement d'image partagent et exécutent une partie restante du décodage.

20. Système de décodage de données codées comprenant un dispositif portable (20) et un serveur (21) éloigné du dispositif et relié à celui-ci par l'intermédiaire d'une voie de communication (29),
le dispositif portable (20) comportant :
un appareil de prise de vue (22) pouvant être mis en oeuvre pour obtenir une image comprenant les données codées,
un moyen de prétraitement (40) pouvant être mis en oeuvre pour exécuter un prétraitement sur des données d'image représentant ladite image de manière à obtenir des données de transfert à partir des données d'image, et
un moyen de transmission (23) pouvant être mis en oeuvre pour transmettre les données de transfert audit serveur (21) par l'intermédiaire de ladite voie de communication (29), et
le système comprenant en outre un moyen de décodage (27), prévu dans ledit serveur (21) et/ou dans un autre équipement (30) relié à celui-ci, destiné à exécuter le décodage des données codées sur la base des données de transfert,
**caractérisé en ce que** la quantité desdites données de transfert est plus petite que celle desdites données d'image et **en ce que** ledit prétraitement est l'un quelconque parmi :
a) la binarisation desdites données d'image de sorte que chaque pixel de l'image soit représenté par une valeur binaire,
b) l'extraction d'une partie de l'image, et
c) la compression desdites données d'image.

21. Système de décodage de données codées selon la revendication 20, dans lequel le serveur est configuré par une pluralité de dispositifs de traitement d'image, dont l'un peut être mis en oeuvre pour exécuter une partie du décodage des données codées sur la base des données de transfert, les autres dispositifs de traitement d'image pouvant être mis en oeuvre pour partager et exécuter une partie restante dudit décodage.

22. Système de décodage de données codées selon la revendication 20 ou 21, dans lequel le serveur et/ou un autre équipement peuvent être mis en oeuvre pour transmettre un résultat du décodage des données codées, par l'intermédiaire de ladite voie de communication ou par l'intermédiaire d'une autre voie de communication, au dispositif portable.

23. Système de décodage de données codées selon la revendication 20 ou 21, dans lequel le serveur peut être mis en oeuvre pour transférer directement une adresse de réseau du dispositif portable à un autre tel équipement de manière à permettre à l'autre équipement de transmettre un résultat du décodage des données codées au dispositif portable par l'intermédiaire d'une autre voie de communication.

24. Système de décodage de données codées selon la revendication 20 ou 21, dans lequel cet autre équipement comprend un dispositif de sortie et l'autre équipement peut être mis en oeuvre pour afficher un résultat du décodage des données codées sur le dispositif de sortie.

25. Système de décodage de données codées selon l'une quelconque des revendications 20 à 24, dans lequel :
le moyen de prétraitement peut être mis en oeuvre pour exécuter le prétraitement dans une première condition ou une seconde condition différente de la première condition, et
après une demande provenant du serveur et/ou d'un autre équipement, émise dans le cas où le serveur et/ou un autre équipement ne réussisse pas à exécuter ledit décodage sur la base de telles données de transfert obtenues dans ladite première condition, le moyen de prétraitement peut être mis en oeuvre pour prétraiter les données d'image obtenues dans ladite seconde condition de manière à en obtenir d'autres données de transfert et le moyen de transfert peut être mis en oeuvre pour transmettre les autres données de transfert au serveur.
